# DEMANDE DE BREVET EUROPEEN

(11) **EP 1 087 553 A1**
(43) Date de publication de la demande: **28.03.2001**
(21) Numéro de dépôt: 00402542.5
(22) Date de dépôt: 14.09.2000
(51) Int. Cl.: H04B 10/18, H04B 10/17

(54) **Régénérateur de signaux optiques multiplexés en longueurs d'onde**

(30) Priorité: 23.09.1999 FR 9911873
(71) Demandeur: ALCATEL, 75008 Paris (FR)
(72) Inventeur: Bigo, Sébastien, 91120 Palaiseau (FR); Mestric, Roland, 75014 Paris (FR)
(74) Mandataire: Lamoureux, Bernard

(57) **Abrégé**

L'invention concerne un régénérateur de signaux optiques multiplexés en longueur d'onde, comprenant
- un démultiplexeur (19) des signaux optiques multiplexés en longueurs d'onde en N canaux individuels (21), et
- un multiplexeur (23) des signaux optiques en sortie des N canaux individuels, en des signaux optiques multiplexés.
Dans chaque canal individuel sont disposés
- un absorbeur saturable (24) pour la remise en forme des signaux optiques de chaque canal, et
- une ligne à retard (25) dont la longueur de chacune est choisie de manière à introduire un délai total τₙ" entre le (n+1)-ième et le n-ième canal pour obtenir entre le (n+1)-ième et le n-ième canal un décalage temporel de τₙ.

## Description

La présente invention concerne un procédé de régénération de signaux optiques à multiplexage en longueur d'onde.

La maîtrise de la technologie de la transmission par fibre optique à multiplexage de longueurs d'onde optique (WDM pour "wavelength divison multiplexing " en anglais) est un facteur important pour répondre aux besoins croissants de débits dans la transmission d'informations.

Le multiplexage en longueur d'onde, appelé WDM par la suite, consiste à combiner sur une même fibre plusieurs canaux modulés ayant chacun une longueur d'onde porteuse différente. Ainsi, le débit global d'une ligne de transmission est égal à la somme des débits des différents canaux.

Toutefois, les signaux optiques WDM sont soumis à des limitations qui réduisent la distance propagation et affectent la qualité des signaux optiques transmis.

Parmi ces limitations, on note plus particulièrement
- les pertes de ligne,
- l'incertitude temporelle de l'arrivée des bits ("jitter" en anglais),
- l'accumulation du bruit provenant de l'amplification de l'émission spontanée, en particulier dans des amplificateurs optiques en ligne tel que les amplificateurs à fibre dopée Erbium, et
- des effets non linéaires, comme l'automodulation de phase ou la modulation de phase croisée.

Pour compenser les pertes de ligne, on procède généralement à une amplification optique en ligne des signaux WDM, par exemple à l'aide d'un amplificateur à fibre dopée Erbium, également connu sous son nom en anglais "EDFA"

Cependant, la simple amplification en ligne ne permet pas de pallier les autres effets limitatifs mentionnés ci-dessus. En effet, ceux-ci subsistent ou sont même provoqués par l'amplification optique en ligne comme par exemple l'accumulation du bruit.

C'est pourquoi il est nécessaire de régénérer les signaux optiques à des intervalles réguliers. La régénération comprend différents traitements appliqués aux signaux optiques comme
- le recalage des signaux optiques dans le temps ("**R**etiming" en anglais), pour prévenir l'incertitude de l'arrivée des bits,
- la remise des signaux optiques dans leur enveloppe d'origine ("**R**eshaping" en anglais), ce qui implique aussi de s'affranchir du bruit, et
- la réamplification des signaux optiques à leurs niveaux d'amplitude d'origine ("**R**eamplifying" en anglais).

Un régénérateur qui réalise ces trois actions sur un signal optique est communément appelé un régénérateur 3R, s'il ne réalise que les deux premières actions, un régénérateur 2R.

Ainsi, on connaît par exemple du document D1 = Nakazawa et al. (1991), "Experimental démonstration of soliton data transmission over unlimited distances with soliton control in time and frequency domain", Electronics Letters, V. 29, N°9, pp. 729-730, 29 avril 1993, un régénérateur agissant sur des signaux optiques sous forme de solitons par l'intermédiaire d'un modulateur optique en LiNO₃.

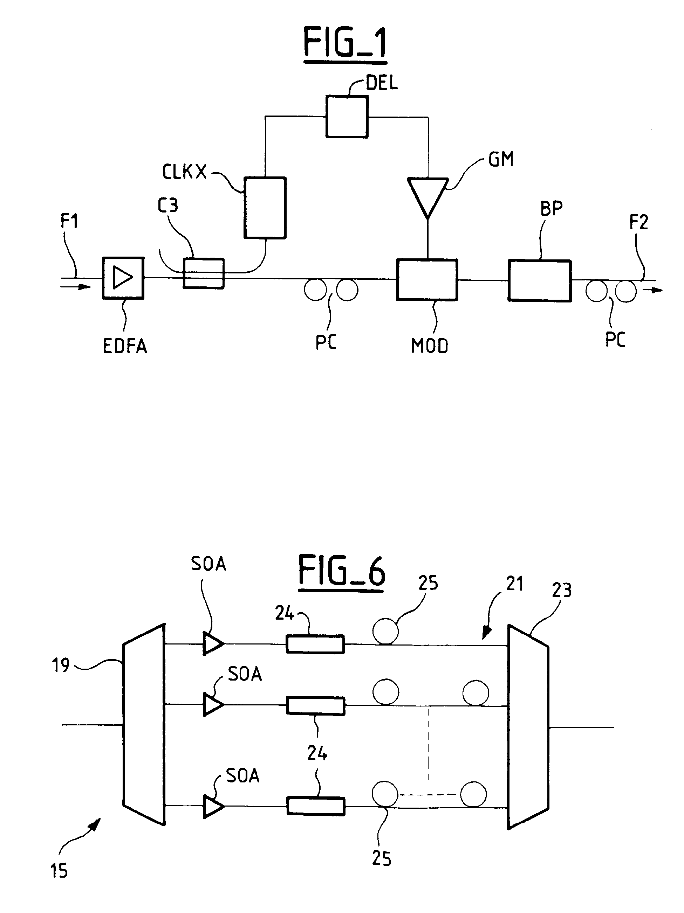

Ce modulateur connu, représenté schématiquement sur la figure 1, effectue une modulation synchrone des signaux optiques arrivants.

A cet effet, le modulateur LiNO₃ est commandé par un signal électronique de commande généré dans un circuit d'horloge à partir du signal optique en ligne. Les moyens de récupération d'horloge comprennent un coupleur optique C3 pour l'extraction d'une partie du signal optique qui se propage entre l'entrée F1 à la sortie F2 ; un circuit d'extraction d'horloge CLKX, une ligne à retard pour fournir un délai DEL, un amplificateur GM pour fournir la puissance de commande nécessaire pour faire fonctionner le modulateur MOD en LiNO₃. Accessoirement, la figure 1 montre un amplificateur optique d'entrée (EDFA) pour pallier les pertes d'insertion du circuit de régénération, des dispositifs de contrôle de polarisation (PC) biréfringent ; et un filtre passe bande BP pour resserrer la distribution spectrale de l'énergie des signaux optiques.

Ce dispositif connu de régénération présente l'inconvénient de nécessiter un circuit de récupération d'horloge ce qui est un composant coûteux et non-intégrable.

Ce problème se pose dans des termes encore plus aigus pour des signaux WDM où on doit prévoir un régénérateur, et par conséquent un circuit de récupération du signal d'horloge, pour chaque canal.

La présente invention vise à pallier les problèmes susmentionnés en proposant un régénérateur de signaux WDM exempt de circuits électroniques ou optiques de récupération du signal d'horloge des divers signaux WDM.

A cet effet, l'invention a pour objet un régénérateur de signaux optiques multiplexés en longueur d'onde, destiné à être interposé entre deux tronçons de fibre optique d'un système de transmission à fibre optique à multiplexage en longueur d'onde comprenant une ligne de transmission formée de plusieurs tronçons de fibre optique, le système de transmission disposant de N canaux de longueurs d'onde différentes, N étant un nombre entier supérieur à l'unité, ledit régénérateur comprenant
- un démultiplexeur des signaux optiques multiplexés en longueurs d'onde en N canaux individuels, et
- un multiplexeur des signaux optiques en sortie des N canaux individuels, en des signaux optiques multiplexés, caractérisé en ce que dans chaque canal individuel est disposé
- un absorbeur saturable pour la remise en forme des signaux optiques de chaque canal, et
- une ligne à retard dont la longueur de chacune est choisie de manière à introduire un délai total τₙ" entre le (n+1)-ième et le n-ième canal pour obtenir entre le (n+1)-ième et le n-ième canal un décalage temporel de τₙ à la sortie dudit régénérateur par rapport à l'entrée du tronçon de fibre optique du système de transmission, destiné à être disposé directement en amont dudit régénérateur, où τₙ est choisi supérieur à zéro.

De façon surprenante, la Demanderesse a constaté que dans un système de transmission par fibre optique à multiplexage en longueur d'onde, l'effet de la modulation de phase croisée (XPM pour " cross phase modulation " en anglais) est le phénomène prépondérant contribuant à incertitude temporelle de l'arrivée des bits ("jitter" en anglais).

La XPM est un effet multicanal dans lequel la modulation de phase d'un canal est induite par l'intensité du signal du ou des canaux voisins. Ce phénomène conduit donc à des distorsions de l'intensité du signal à transmettre au travers de la GVD ( "group velocity dispersion" en anglais pour dispersion de vitesse de groupe) et ainsi à une incertitude temporelle de l'arrivée des bits.

Le régénérateur tel que défini ci dessus permet par introduction de différents délais dans les canaux individuels de signaux optiques de réduire efficacement la XPM, voire de s'en affranchir complètement ce qui conduit donc à diminuer considérablement l'incertitude sur l'arrivée des bits.

Grâce au régénérateurs selon l'invention, le recalage actif des signaux optiques à l'aide de régénérateurs disposant d'un circuit de récupération d'un signal d'horloge peut être fortement réduit, voire supprimé.

Par ailleurs, le régénérateur selon l'invention défini ci-dessus présente l'avantage de pouvoir être intégré de manière compacte dans un seul composant et d'être d'une configuration plus simple que les régénérateurs à circuit de récupération du signal d'horloge.

Le régénérateur selon l'invention peut comporter en outre une ou plusieurs des caractéristiques suivantes :
- τₙ est en outre choisi inférieur à une valeur supprimant la corrélation des contributions de distorsion d'intensité de chaque tronçon de fibre du système de transmission,
- pour tous les canaux τₙ=τ,
- le décalage temporel τ est inférieur à environ 600ps,
- le décalage temporel τ est choisi de manière à obtenir une interférence destructive entre les différentes contributions de distorsion des tronçons individuels de fibre optique du système de transmission à fibre optique à multiplexage en longueur d'onde,
- le décalage temporel τ est approximativement compris entre T/10 et 1,5*T, où T est la durée d'un bit,
- le décalage temporel τ est approximativement compris entre 5 et 200ps,
- le multiplexeur et le démultiplexeur sont réalisés sous la forme d'une unité combinée multiplexage/démultiplexage avec un réseau de guides d'ondes en rangées dans lequel les absorbeurs saturables et les lignes à retard sont disposés dans les boucles de retour,
- un amplificateur optique à semi-conducteur est disposé dans chaque canal en série avec l'absorbeur saturable.

L'invention a en outre pour objet un système de transmission à fibre optique à multiplexage en longueur d'onde comprenant une ligne de transmission formée de plusieurs tronçons de fibre optique avec un régénérateur interposé entre deux tronçons de fibre optique, caractérisé en ce que la majorité des régénérateurs du système sont des régénérateurs selon l'invention tel que défini ci-dessus.

D'autres caractéristiques et avantages de l'invention ressortiront de la description suivante, donnée à titre d'exemple, sans caractère limitatif, en regard des dessins annexés sur lesquels :
- La figure 1, déjà expliquée, montre un schéma synoptique d'un régénérateur de signaux optiques connu de l'état de la technique,
- La figure 2 montre un schéma synoptique d'un système de transmission équipé de régénérateurs selon l'invention,
- La figure 3 est un schéma synoptique d'une partie du module de répéteur de la figure 2,
- Les figures 4A, 4B, 4C et 4D représentent une suite de quatre schémas montrant le décalage temporel entre deux canaux n et n+1 à des emplacements différents du système de transmission pour illustrer le fonctionnement du régénérateur selon l'invention,
- La figure 5 est un graphique montrant le résultat d'une simulation numérique de l'aspect "réduction de la XPM" du régénérateur selon l'invention,
- La figure 6 est une première variante du schéma de la figure 3, et
- La figure 7 est une seconde variante du schéma de la figure 3.

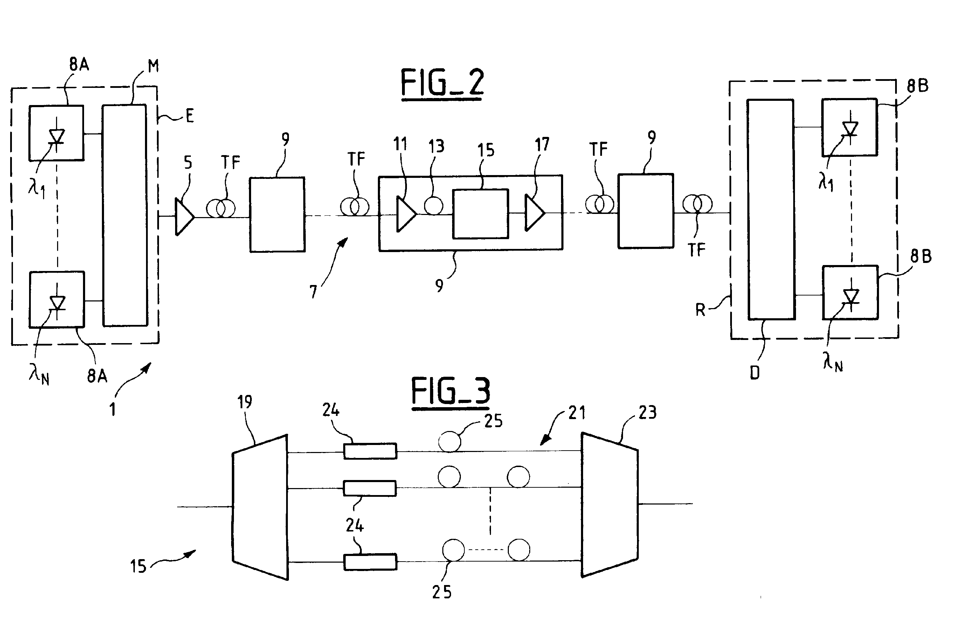

La figure 2 est un schéma synoptique d'un système 1 de transmission de données à fibre optique à multiplexage en longueur d'onde.

Ce système 1 comprend, disposés en ligne, un émetteur optique E de signaux optiques multiplexés en longueur d'onde, un premier amplificateur optique d'attaque 5, une ligne 7 de transmission à fibre optique des signaux optiques multiplexés et un récepteur optique R.

L'émetteur E comprend une pluralité de sources optiques 8A aptes à émettre des signaux optiques ayant des longueurs d'onde respectives λ₁, λ₂, ....λₙ...λ_{N} ( n étant un nombre entier compris entre 1 et N ; N étant un nombre naturel quelconque) définissant ainsi chacun un canal de transmission avec une porteuse de longueur d'onde associée, et un multiplexeur M pour introduire les signaux optiques dans la ligne 7 de transmission.

De manière symétrique, le récepteur optique R comprend un démultiplexeur D et une pluralité de détecteurs 8B aptes à recevoir les signaux optiques de longueurs d'onde respectives λ₁, λ₂, ...λ_{N}.

La ligne 7 de transmission comprend K tronçons TF d'une fibre optique de transmission (K étant un nombre naturel). Chaque tronçon TF est par exemple formé par une fibre standard SMF (pour « standard single mode fiber » en anglais) ayant une dispersion typique de 17ps/nm.km, et possède par exemple une longueur de 100km environ.

Entre chaque tronçon TF est disposé un module 9 de répéteur comprenant en ligne un premier amplificateur optique 11 par exemple du type à fibre dopée Erbium EDFA (pour « Erbium Doped Fiber Amplifier en anglais), une portion de fibre compensatrice de dispersion DCF 13 ( pour « dispersion compensated fiber » en anglais ) afin de réduire la GVD, un régénérateur 15 et un second amplificateur optique 17 qui peut également être du type à fibre dopée Erbium EDFA.

On se réfère maintenant à la figure 3 qui présente un schéma synoptique plus détaillé d'un premier mode de réalisation du régénérateur 15.

Ainsi que l'on peut le voir sur cette figure 3, le régénérateur 15 comprend un démultiplexeur 19 à une entrée et N sorties, un ensemble de N lignes de fibre optique 21 en parallèle correspondant aux N canaux de transmission, et un multiplexeur 23 à N entrées et une sortie.

Chacune des lignes de fibre optique comporte d'une part un absorbeur saturable 24 et d'autre part une ligne 25 à retard optique.

Les absorbeurs saturables 24 sont de préférence des composants semiconducteurs de type quaternaire tels qu'un composant lnₓGa_{1-X} As_{Y}P_{1-Y}. Ce composant est soit du type massif, soit du type en couches minces, à puits quantiques.

Un composant à absorbant saturable absorbe les amplitudes faibles et laisse passer les fortes amplitudes. De cette manière, il remet en forme les signaux optiques entrants et filtre le bruit contenu dans les pieds de l'impulsion, c'est-à-dire le bruit pour les faibles amplitudes du signal, est absorbé par le composant.

Un composant à absorbant saturable en couches minces, c'est-à-dire à puits quantique, est décrit par exemple dans l'article D2 = "2,4Gbit/sec all optical discrimination experiment using a high speed saturable absorber optical gate" (Une expérience de discrimination d'impulsion entièrement optique à 2,4 Gbits/sec utilisant une porte optique à absorbant saturable à grande vitesse) de H. Tsuda et autres- Electronic Letters du 15 février 1996, Vol. 32, n DEG 4, pages 365 et 366.

Les lignes 25 à retard optique sont choisies de manière à introduire entre les canaux un retard de telle sorte que le (n+1)-ième et le n-ième canal sont décalés de τₙ à la sortie du régénérateur 15 par rapport au tronçon TF de fibre disposé directement en amont du régénérateur 15.

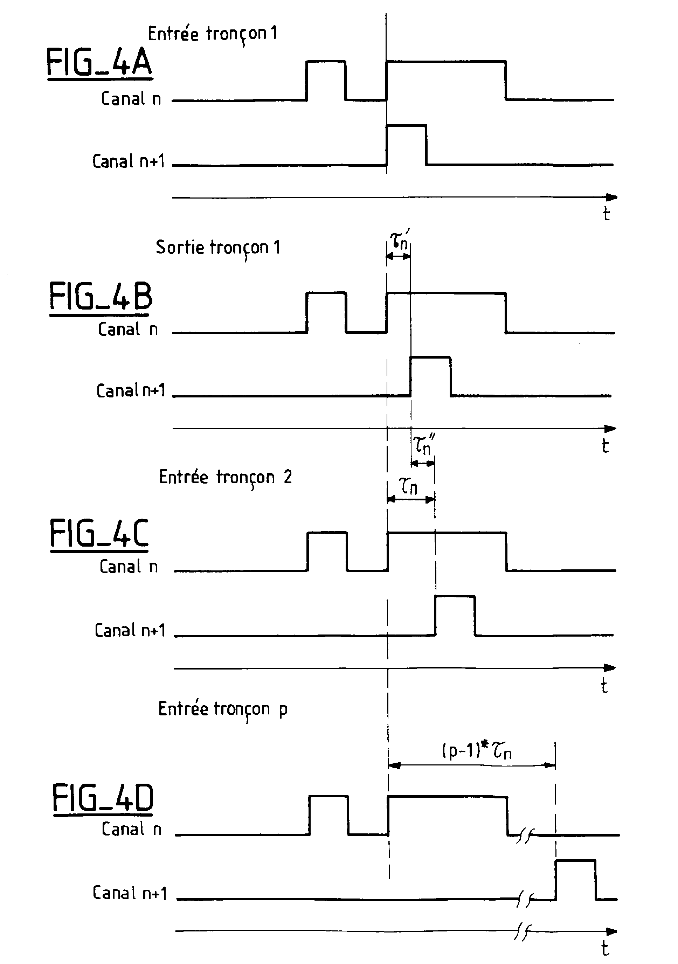

Pour illustrer l'action des lignes à retard 25 du régénérateur 15, on a représenté, à titre d'exemple, sur les figures 4A, 4B, 4C et 4D le décalage temporel de deux séquences de bits transmises respectivement sur le canal n et sur le canal n+1 à des emplacements différents du système 1 de transmission.

Ainsi que l'on voit sur la figure 4A, la séquence de bits sur le canal n est : 10111, et celle sur le canal n+1 : 00100. Pour mieux illustrer le principe de fonctionnement du régénérateur, les séquences de bits sont synchronisées à l'entrée du premier tronçonTF de fibre.

En sortie du premier tronçon TF de fibre, les deux séquences sont décalées temporellement du fait de la dispersion chromatique dans le tronçon de fibre (voir figure 4B). Puis, dans le module répéteur 9, la portion de fibre DCF 13 réduit la dispersion entre les deux canaux n et n+1 à une valeur τₙ'.

Ensuite, en prenant en compte le décalage temporel des deux séquences à son entrée, le régénérateur 15 introduit, par l'intermédiaire des lignes à retard 25, un décalage supplémentaire τₙ" entre les séquences, de sorte que par rapport à l'entrée du premier tronçon TF de fibre, les séquences des canaux n et n+1 1 sont décalées de τₙ à la sortie du régénérateur 15, c'est-à-dire à l'entrée du second tronçon, comme cela est montré sur la figure 4C.

Ainsi, chaque régénérateur 15 disposée dans la ligne de transmission 7 introduit un décalage de sorte qu'à l'entrée du tronçon p ou à la sortie du (p-1)-ième régénérateur, les deux séquences sont décalées de (p-1)* τₙ par rapport à l'entrée du premier tronçon TF de fibre optique du système 1 de transmission. De cette manière, on prend en compte les contributions à la XPM de tous les tronçons TF de fibre et on réduit efficacement la XPM et, par voie de conséquence, l'incertitude de l'arrivée des bits.

De préférence, τₙ est choisi supérieur à zéro et inférieur à une valeur supprimant la corrélation des contributions de distorsion d'intensité des divers tronçons TF de fibre.

Avantageusement, on choisit pour tous les canaux τₙ=τ, avec τ supérieur à 5ps et inférieur à environ 600ps.

La XPM peut être réduite davantage si on choisit le décalage temporel τ de manière à obtenir une interférence destructive entre les différentes contributions de distorsion des tronçons TF de fibre optique. Dans ce cas, la XPM peut être réduite d'un facteur K² environ.

A cet effet, on fixe le décalage temporel τ de façon à ce qu'il soit approximativement compris entre T/10 et 1,5*T, où T est la durée d'un bit.

Typiquement, on choisira le décalage temporel τ entre 5 et 200ps.

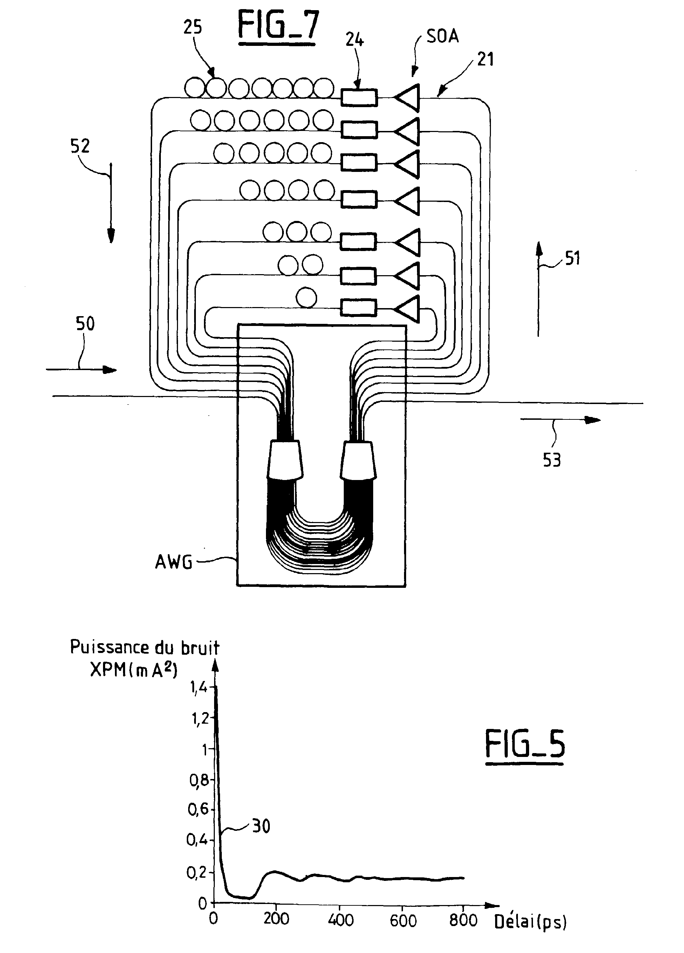

La figure 5 présente un graphique montant le résultat d'une simulation numérique d'un système de transmission tel que décrit en référence aux figures 2 et 3 avec dix tronçons de fibre SMF de 100km de longueur chacun, mais sans absorbeur saturable pour illustrer l'aspect "réduction de la XPM" du régénérateur selon l'invention. On y a représenté en abscisses le décalage temporel ou délai τ en ps entre deux canaux voisins et en ordonnées la puissance du bruit XPM en mA².

La courbe 30 de cette figure 5 montre clairement que le bruit XPM peut être efficacement réduit pour un τ inférieur à 600ps, c'est-à-dire lorsqu'on maintient la corrélation entre les contributions des distorsions des tronçons TF individuels, et atteint un minimum s'il est compris entre 5 et 200ps.

L'efficacité de l'unité 15 de réduction de la modulation de phase croisée XPM est d'autant plus grande que l'effet de XPM sera important. Ceci est par exemple le cas dans les fibres du type NZDSF ( pour "non zero dispersion shifted fiber" en anglais) présentant une dispersion de 2 à 3ps /nm.km, quel que soit le signe.

Selon une variante avantageuse représentée sur la figure 6, un amplificateur optique à semi-conducteur SOA est disposé dans chaque ligne 21 en série avec l'absorbeur saturable, de préférence en amont de celui-ci. Cet amplificateur SOA permet de compenser les pertes dues au régénérateur lui-même, en particulier les pertes dues au multiplexeur et au démultiplexeur.

Selon encore une autre variante avantageuse de l'invention représentée sur la figure 7, le multiplexeur et le démultiplexeur du régénérateur 15 sont réalisés sous la forme d'une unité combinée multiplexage/démultiplexage AWG avec un réseau de guides d'ondes en rangées ( "arrayed waveguide grating" en anglais) dans lequel les absorbeurs saturables et les lignes à retard sont disposés dans les boucles de retour.

Une unité combinée multiplexage/démultiplexage avec un réseau de guides d'ondes en rangées dans laquelle des moyens de traitement de signaux optiques sont disposés dans des boucles de retour, est connu du document JP 7 098 424.

Dans la figure 7, la flèche 50 indique le sens de propagation du signal d'entrée WDM dans l'unité AWG. De manière connue, le signal optique WDM arrivant est démultiplexé dans l'unité AWG. Ensuite, les signaux optiques démultiplexés se propagent suivant la flèche 51 dans les lignes 21 qui forment les boucles de retour de l'unité AWG. Comme cela a déjà été présenté à la figure 5, dans chaque ligne 21 est disposé un amplificateur à semi-conducteur SOA, un absorbeur saturable 24 et des lignes à retard 25 telles que décrites ci dessus.

Les signaux optiques ainsi régénérés sont ensuite envoyés ( voir flèche 52) à nouveau dans l'entrée de l'unité AWG pour être multiplexés de manière connue afin de donner en sortie un signal optique WDM régénéré dont le sens de propagation est indiqué par la flèche 53.

A l'exception du démultiplexage / multiplexage réalisé de manière originale dans une seule unité AWG, ce mode de réalisation fonctionne de la même manière que le mode de réalisation montré sur la figure 6.

La variante de la figure 7 présente l'avantage qu'elle peut être réalisée sous la forme d'un composant entièrement intégré.

Par ailleurs, on note que le régénérateur selon l'invention permet en outre de réduire considérablement les interactions entre canaux dues à la diffusion Raman stimulée ou au mélange à quatre ondes FWM (pour « Four-Wave-Mixing» en anglais).

On comprend donc que le régénérateur selon l'invention permet, en supprimant la XPM par les lignes à retard et en remettant en forme les signaux optiques par des absorbeurs saturables, de réaliser une régénération sans un circuit complexe de récupération du signal d'horloge.

Selon la longueur de la ligne de transmission du système de transmission à fibre optique, il est possible de se passer complètement des régénérateurs à circuit de récupération du circuit d'horloge. Toutefois, pour de très grandes distances de propagation, il peut s'avérer judicieux d'utiliser un système mixte de transmission (avec des régénérateurs selon l'invention et ceux à circuit de récupération du circuit d'horloge), ce qui permet quand même de réduire considérablement le nombre de ces régénérateurs classiques à circuit de récupération du circuit d'horloge, contribuant ainsi la fiabilité et à la réduction du coût d'achat et de maintenance du système de transmission.

## Revendications

1. Régénérateur de signaux optiques multiplexés en longueur d'onde, destiné à être interposé entre deux tronçons (TF) de fibre optique d'un système (1) de transmission à fibre optique à multiplexage en longueur d'onde comprenant une ligne (7) de transmission formée de plusieurs tronçons (TF) de fibre optique, le système de transmission (1) disposant de N canaux de longueurs d'onde différentes, N étant un nombre entier supérieur à l'unité, ledit régénérateur comprenant
- un démultiplexeur (19) des signaux optiques multiplexés en longueurs d'onde en N canaux individuels (21), et
- un multiplexeur (23) des signaux optiques en sortie des N canaux individuels, en des signaux optiques multiplexés, caractérisé en ce que dans chaque canal individuel est disposé
- un absorbeur saturable (24) pour la remise en forme des signaux optiques de chaque canal, et
- une ligne à retard (25) dont la longueur de chacune est choisie de manière à introduire un délai total τₙ" entre le (n+1)-ième et le n-ième canal pour obtenir entre le (n+1)-ième et le n-ième canal un décalage temporel de τₙ à la sortie dudit régénérateur (15) par rapport à l'entrée du tronçon (TF) de fibre optique du système de transmission (1), destiné à être disposé directement en amont dudit régénérateur (15), où τₙ est choisi supérieur à zéro.

2. Régénérateur selon la revendication 1, caractérisé en ce que τₙ est en outre choisi inférieur à une valeur supprimant la corrélation des contributions de distorsion d'intensité de chaque tronçon (TF) de fibre du système de transmission (1).

3. Régénérateur selon la revendication 1 ou 2, caractérisé en ce que pour tous les canaux τₙ=τ.

4. Régénérateur selon la revendication 3, caractérisé en ce que le décalage temporel τ est inférieur à environ 600ps.

5. Régénérateur selon l'une quelconque des revendications 2 à 4, caractérisé en ce que le décalage temporel τ est choisi de manière à obtenir une interférence destructive entre les différentes contributions de distorsion des tronçons individuels (TF) de fibre optique du système (1) de transmission à fibre optique à multiplexage en longueur d'onde.

6. Régénérateur selon la revendication 4 ou 5, caractérisé en ce que le décalage temporel τ est approximativement compris entre T/10 et 1,5*T, où T est la durée d'un bit.

7. Régénérateur selon la revendication 5 ou 6, caractérisé en ce que le décalage temporel τ est approximativement compris entre 5 et 200ps.

8. Régénérateur selon l'une quelconque des revendications 1 à 7, caractérisé en ce que le multiplexeur et le démultiplexeur sont réalisés sous la forme d'une unité combinée multiplexage/démultiplexage avec un réseau de guides d'ondes en rangées dans lequel les absorbeurs saturables (24) et les lignes à retard (25) sont disposés dans les boucles de retour.

9. Régénérateur selon l'une quelconque des revendications 1 à 8, caractérisé en ce qu'un amplificateur optique à semi-conducteur (SOA) est disposé dans chaque canal en série avec l'absorbeur saturable(24).

10. Système (1) de transmission à fibre optique à multiplexage en longueur d'onde comprenant une ligne (7) de transmission formée de plusieurs tronçons (TF) de fibre optique avec un régénérateur (9) interposé entre deux tronçons (TF) de fibre optique, caractérisé en ce que la majorité des régénérateurs (15) dudit système (1) sont des régénérateurs selon l'une quelconque des revendications 1 à 9.
